# EUROPEAN PATENT SPECIFICATION

(11) **EP 4 164 850 B1**
(45) Date of publication and mention of the grant of the patent: **21.08.2024**
(21) Application number: 21735359.8
(22) Date of filing: 10.06.2021
(51) Int. Cl.: B29B 17/02

(54) **METHOD AND APPARATUS FOR SEPARATING SYNTHETIC TURF INFILL MATERIAL**
VERFAHREN UND VORRICHTUNG ZUM TRENNEN VON KUNSTSTRASSENEINFÜLLMATERIAL
PROCEDE ET APPAREIL POUR SEPARER UN MATERIAU DE REMPLISSAGE DE GAZON SYNTHETIQUE

(30) Priority: 11.06.2020 GB 202008848
(43) Date of publication of application: 19.04.2023
(73) Proprietor: Coulton, Richard Henry, Earlswood, Chepstow NP16 6RH (GB)
(72) Inventor: Coulton, Richard Henry, Earlswood, Chepstow NP16 6RH (GB)
(74) Representative: Abel & Imray LLP
(86) International application number: PCT/GB2021/051441
(87) International publication number: WO 2021/250411

(56) References cited:
- WO-A1-2013/042817
- WO-A1-2017/200284
- WO-A1-2020/002977
- JP-A- 2008 036 550
- JP-A- 2008 068 177
- JP-A- 2013 036 197
- KR-A- 20130 106 053
- KR-A- 20150 055 759
- KR-B1- 101 730 154
- US-A1- 2013 017 023

## Description

### Field of the Invention

The present invention concerns separation of infill material of synthetic turf pitches. More particularly, but not exclusively, this invention concerns a method for separating infill material of synthetic turf, the infill material comprising sand, rubber and fibres. The invention also concerns an apparatus for separating sand and rubber from synthetic turf infill material.

### Background of the Invention

Synthetic turf is a surface which is commonly used in applications such as football pitches, hockey pitches, baseball and American football fields, as well as playgrounds, residential and commercial lawns and tennis courts etc. Synthetic turf is primarily used as a substitute for a grass surface. Synthetic turf has many advantages over a grass surface, most notably concerning cost, maintenance, lifespan and all-weather capability. Synthetic turf is a generic term for synthetic grass surfaces, and may be synonymous with, for example, AstroTurf ^{™}.

Typically, synthetic turf comprises grass-like fibres (hereafter fibres), which stick out of a backing, and infill material, which forms a soft earth-like layer at the base of the fibres. The infill material comprises sand and rubber, usually in the form of granules. When synthetic turf is new, most of the fibres are held in place, however by the end of the lifecycle of a synthetic turf, some of the fibres will have become dislodged and may be mixed with the infill material.

At the end of the lifecycle of a synthetic turf pitch (typically in the region of 5 to 20 years) it is desirable to reclaim the individual components of the synthetic turf: namely fibres, sand and rubber. One reason it is desirable to reclaim the individual components is to save on the cost of landfill. Landfill costs for sand, rubber and fibres are especially high, given their weight and environmental properties. It is desirable to reclaim the sand, rubber and fibre as separate components at a high-purity, so that they can be re-used.

One method of recycling synthetic turf is disclosed in WO 2015/059094 (Dennis et al.). WO 2015/059094 describes a process for recycling synthetic turf product which requires that the synthetic turf is transported to a recycling facility, before the synthetic turf is downsized and fed through a number of separation means. In this method, owing to the total weight and volume of the synthetic turf, transportation costs (for transporting the turf to the recycling facility) can be high.

JP2008036550A discusses a sorting method of artificial grass filler, in which the filler consisting of silica sand and elastic aggregate collected from artificial grass is supplied to a tilted vibration screen dipped in a water tank from its upper end, and silica sand is precipitated on the water tank bottom as undersize. The elastic aggregate is made to flow down together with washing water and introduced to the precipitation tank of an elastic aggregate collection device.

JP2013036197A discusses a recycling method comprising steps of removing the used sand-containing artificial turf from a laid part, washing the removed used sand-containing artificial turf with water to separate the artificial turf and the joint sand, and recovering, burning and drying the separated joint sand, in the water washing step, two or more water tanks are connected with a drop respectively so that supernatant water of the previous water tank flows into the next water tank, the joint sand is precipitated from the one of a larger grain size at bottom parts of the respective water tanks, the joint sand is sucked and recovered by a vacuum pump respectively, and washing water is reused as circulation water.

KR101730154B1 discusses a separating apparatus for an artificial grass filling material, and more specifically, a separating apparatus for an artificial grass filling material which enables a user to remove artificial grass with degraded quality, and to separate sand and elastic rubber chips forming a filter included in the removed artificial grass for recycling.

WO2017200284A1 relates to an artificial turf filler sorting device and a sorting method using the same. In connection with the configuration of the sorting method, a filler sorting method for separating/sorting silica sand and elastic bodies, which constitute the filler, comprises: a vibrating/separating process of introducing the filler onto a table and vibrating the table such that, among the silica sand and the elastic bodies that constitute the filler, silica sand and elastic bodies, which have large particle size, and silica sand and elastic bodies, which have a small particle size, are separated/sorted, respectively, using multiple guides formed on the upper surface of the table

WO2020002977A1 discusses a system for classification of particulate material of variable sizes and extraction of fine graded particles with waste management and water recycling system with maximum recovery of process water.

WO2013042817A1 discusses a method for recycling artificial grass containing fibrous material, and comprises: a supplying step for supplying the artificial grass comprising a base material, and a yarn; a separation step for separating the filler from the artificial grass yarn and the base material; and a crushing step for crushing the yarn and the base material of the artificial grass from which the filler is separated; and a reconstruction step for forming the artificial grass yarn and the base material that are crushed into recycled material.

JP2008068177 discusses a method of recovering artificial lawn comprising containing the filling from a laid surface by winding it in a roll shape with the leaf/stem surface inside, the recovered artificial lawn with the filling contained is washed with water while in the rolled condition as it is, being rewound, or being gradually loosened by rewinding it, the filling is washed off into the water from the artificial lawn, the filling and the artificial lawn not containing the filling are separated and recovered, and the covered artificial lawn not containing the filling is crushed to form artificial lawn chips.

KR20150055759 discusses a sorting method used to recycle a filler material including the mixture of two or more materials. The sorting method includes: a first sorting step of sorting two or more materials based on the particle size; a second sorting step of sorting the materials having the particle size in a predetermined range based on the weight with a centrifugal force after the first sorting step; and a third sorting step of sorting the materials having the particle size in the predetermined range based on the weight through vibration after the second sorting step.

US2013017023 discusses a mobile infill reclamation system comprising a mobile platform configured to be readily moved from a first location to a second location in relatively close proximity to an existing synthetic turf surface, a support structure mounted on the mobile platform, multiple processing components supported by the support structure and configured and arranged to process used infill material from the existing synthetic turf surface, an infill intake supported by the support structure and configured and arranged to receive the used infill material, and an infill output supported by the support structure and configured and arranged to discharge infill material processed by the processing components.

KR20130106053 discusses a device for a waste artificial turf mat comprises a pair of supply rollers, a single needle roller, a second separation roller, a separation unit, a cutting roller, a first separation roller, and a collection roller. The pair of supply rollers is vertically engaged with each other around a waste artificial turf mat to supply the waste artificial turf mat. The single needle roller inverts the waste artificial turf mat supplied by the supply roller.

It is an object of the present invention to provide an improved method and apparatus for separating the infill material which are present in synthetic turf products.

The present invention seeks to mitigate the above-mentioned problems. Alternatively or additionally, the present invention seeks to provide an improved method and apparatus for separating infill material of synthetic turf.

### Summary of the Invention

In a first aspect of the invention there is provided a method according to claim 1. In a second aspect of the invention there is provided an apparatus according to claim 9. Optional but preferred features are set out in the dependent claims.

The present invention provides, according to a first aspect, a method for separating infill material of synthetic turf. The infill material comprises sand, rubber and fibres. The method comprises combining (or mixing) the infill material with water to form an infill slurry, and separating one or more of the sand, rubber and fibres from the infill slurry.

Advantageously, by mixing the infill material with water, water-based separation processes can be used. For an equivalent volume of material to be separated, water-based separation apparatus is typically lighter and more compact than dry separation equipment. Thus, use of water-based separation may facilitate on-site separation of infill material.

Use of water to separate the sand from the synthetic turf infill may also result in sand that looks clean (in contrast, dry sieved sand separated from SBR (styrene-butadiene rubber, also referred to as black rubber) often appears discoloured) thereby facilitating the reuse of the sand in synthetic turf pitches.

The method may comprise separating the infill slurry into a fibre slurry and a sand/rubber slurry using a first separator. The method may comprise separating the sand/rubber slurry to provide a sand slurry and a rubber slurry using a second separator. The second separator may be of a different type to the first separator. It will be appreciated that each separator may produce additional fractions not mentioned here. For example, the second separator may produce a sand/rubber slurry that is left over after the sand slurry and rubber slurry have been separated off.

A hydrocyclone is used to separate the infill slurry into fibre slurry and a sand/rubber slurry. Hydrocyclones may be especially useful in this process, as they may allow for the efficient removal of fibre from infill slurry. Additionally or alternatively, a hydrocyclone can achieve this result whilst only occupying a relatively small volume.

It may be that a density separator is used to separate sand and rubber from sand/rubber slurry (i.e. to produce a sand slurry and a rubber slurry). A density separator may be configured to separate two or more fractions using the difference in density between each fraction. A density separator may enable the rubber and sand to be separated from each other effectively. Additionally or alternatively, a density separator may enable the rubber and sand to be separated effectively within a relatively small amount of space.

It may be that water is injected into the sand/rubber slurry after it has left the hydrocyclone and before it has entered the density separator. Water may be added to enable the density separator to work effectively, after water has been removed from the infill slurry in the hydrocyclone overflow.

It may be the majority of the water which enters the hydrocyclone as part of the infill slurry leaves the hydrocyclone in the fibre slurry. The fibre slurry may be the overflow of the hydrocyclone. The sand/rubber slurry may be the underflow of the hydrocyclone.

It may be that the water component of the fibre slurry is recycled for subsequent use in the method. At least part of the water component of the fibre slurry may be added to the sand/rubber slurry, for example immediately upstream of the density separator and/or downstream of the hydrocyclone. At least part of the water component of the fibre slurry may be added in the initial mixing of infill material and water. The method may comprise separating the fibres from the fibre slurry to produce a water stream, for example using a fibre screen to remove the fibres from the slurry. The method may comprise passing the water stream through a water recycling unit (for example via a clarifier) before reuse.

The method may comprise a step of separating trash (also referred to herein as debris) from the infill material, for example using a trash screen. Thus, the method may further comprise the step of feeding the infill material into trash screen to separate debris from the infill material. Debris is commonly present in the infill material and may comprise foreign objects brought onto the synthetic turf during use (on people's shoes for instance), or blown onto the surface. Having a trash screen may enable the efficient removal of debris, and/or improve the efficiency of downstream processes, which do not need to be designed to cope with debris throughput. The trash screen may have a grating-size (a trash screen size) of between 3mm and 8mm.

The step of combining the infill material with water to form an infill slurry may comprise mixing the infill material with water in a compartment. This step may comprise passing water and infill material through the trash screen to collect in a compartment, for example a slurry hopper.

It will be appreciated that the steps described above may be carried out simultaneously or sequentially.

It may be that the infill material is first loaded into a feed hopper forming part of a separation apparatus, for example an apparatus in accordance with the second aspect, below. Use of a feed hopper may allow for a controlled input rate of infill material to the rest of the process, thereby ensuring that the correct composition of liquids and solids is fed from the mixing stage.

It may be that the infill material is fed from the feed hopper to the trash screen, for example using a conveyor belt and/or auger.

The density separator is a spiral separator
In the case that the density separator is a spiral separator, the method may comprise the sand/rubber slurry flowing down one or more spiral (or helical) watercourses (also known as troughs) such that, as sand/rubber slurry travels down the spiral, one of the sand and rubber concentrates in the region of the outer end of the width of the watercourse and the other of the sand and rubber concentrates in the region of the inner end of the width of the watercourse. The method may comprise using a first stream from one side of the watercourse and a second stream from the other side of the watercourse, the first stream being one of a sand slurry and a rubber slurry, the second stream being the other of a sand slurry and a rubber slurry. The method may comprise using a third stream from a central region of the watercourse, the third stream being a sand/rubber slurry. The method may comprise recycling the third stream, for example reinjecting it at a point upstream of the density separator, so that is may be separated.

The method may comprise a step of removing the infill material from a synthetic turf pitch. The infill material may be removed from the pitch prior to combining with the water, for example prior to be loaded into the feed hopper. The infill material may be removed from the synthetic turf pitch by vacuuming, raking, brushing and/or sweeping. Removal of the infill material from the synthetic turf pitch may be done with rotating brushes.

It may be that the method described above is carried out on site (i.e. at the location where the synthetic turf is installed). Thus one or more, or all, of the steps described for separating infill material of synthetic turf can take place on site. It may be that a separation apparatus (for example the apparatus of the second aspect) for performing the method is transported to the location where the synthetic turf is installed. The equipment may be placed, for the duration of the method being performed, at a location close to the synthetic turf surface (e.g. a synthetic turf pitch), or on the synthetic turf surface. For example, the apparatus for performing the method may be, during use, located within 2km, for example within 1km, within 500 meters or within 50 meters of the synthetic turf surface. On site means the general vicinity of the synthetic turf pitch, for instance the grounds of the site where the pitch is located. On site may include the area within a perimeter surrounding the pitch, for example of up to 500 meters from the pitch or at a central location within a large sport facility, for example within 2km of the pitch. Carrying out the method on site may significantly reduce transportation costs and/or the time taken to complete the separation process.

Carrying out the method on site may allow the sand and/or rubber recovered using the separation process to be reused at that site, for example in any new or refurbished synthetic turf surface. Thus, the method may comprise a step of reusing the sand and/or rubber recovered using the present method as infill in a second synthetic turf surface. Reuse of the sand and/or rubber may reduce the environmental impact of new synthetic turf surfaces.

Alternatively, the apparatus may be located off site. In this embodiment, material is transported to the apparatus by truck. This may be advantageous where there is limited space near the site, and space for the apparatus may be provided at an intermediate distance from the site, of between, for instance, 2km to 100km from the site.

The method may comprise a step of reconfiguring the apparatus between a transport configuration and an operative configuration. For example, by moving (for example rotating and/or displacing) one or more of the separators, for example a spiral separator (if present) and/or a hydrocyclone (if present) from a transport configuration to an operation configuration. The step of reconfiguring the apparatus from the operative configuration to the transport configuration may reduce the volume of the apparatus. Reconfiguring the apparatus may facilitate transport, for example by allowing the apparatus to fit inside the footprint of a standard shipping container (for example a 20ft shipping container).

The method may comprise chemically dosing the water to control levels of bacteria and/or other pathogens that may be present. Dosing may be carried out by a dosing unit, for example forming part of a water recycling unit.

The method may be carried out using an apparatus in accordance with the second aspect of the invention.

According to a second aspect of the invention, there is provided an apparatus for separating sand and rubber from synthetic turf infill material comprising sand, rubber and fibres. The apparatus comprises a compartment for receiving infill material and mixing the infill material with water to produce an infill slurry. The apparatus comprises a separator configured to separate one or more of (i) sand, (ii) rubber and/or (iii) fibres from the infill slurry. The apparatus may be suitable for performing the method according to the first aspect of the present invention.

The apparatus may comprise more than one separator, each separator being configured to separate different element(s) from the infill slurry. The apparatus comprises a first separator configured to separate the infill slurry into a fibre slurry and a sand/rubber slurry. The apparatus comprises a second separator configured to separate the sand/rubber slurry to provide a sand slurry and a rubber slurry. The apparatus may be configured such that the first separator receives infill slurry from the compartment. The apparatus may be configured such that the second separator receives the sand/rubber slurry from the first separator. The first separator may be located upstream of the second separator. The second separator may be in fluid communication with an outlet of the first separator, in order to receive the sand/rubber slurry therefrom. The apparatus may comprise a water line configured to provide water to the sand/rubber slurry after leaving the first separator.

The apparatus comprises a hydrocyclone for separating one or more of sand, rubber and fibres from the infill slurry. Thus, the hydrocyclone is the first separator. The hydrocyclone separates the infill slurry into two fractions: a fibre slurry and a sand/rubber slurry. The hydrocyclone may be located downstream of the feed and/or slurry hopper (if present) and the trash screen (if present, see below). The hydrocyclone may comprise a chamber having a geometry configured such that infill slurry injected therein via forms a vortex. The hydrocyclone may comprise an inlet via which infill slurry from the compartment enters the hydrocyclone. The hydrocyclone may comprise a first (overflow) outlet and a second (underflow) outlet. The fibre slurry may exit the hydrocyclone via the first outlet and the sand/rubber slurry may exit the hydrocyclone via the second outlet. The first and second outlets may be spaced apart along the longitudinal axis of the hydrocyclone. In use, the first outlet may be located above the second outlet. The chamber may comprise a cylindrical section into which liquid is fed tangentially via the inlet. The chamber may comprise a cone extending from an end of the cylindrical section. It may be that, in use, the first outlet is located at the top of the cylindrical section and the second outlet is located at the bottom of the cylindrical section. Separating the fibre and sand/rubber slurry using a hydrocyclone has been found to enable an especially compact apparatus to be used.

The apparatus comprises a (wet) density separator for separating the sand/rubber slurry to provide a sand slurry and a rubber slurry. Thus, the density separator is the second separator. Separating the sand and rubber on density using a separation process including water has been found to enable an especially compact apparatus to be used.

The density separator is a spiral separator.

The spiral separator may comprise one or more, for example two, spiral (or helical) watercourses. In use, the longitudinal axis of each spiral may be substantially vertical. Thus, the spiral separator may be a vertical spiral separator. Each watercourse may comprise a flow gallery or trough along which the sand/rubber slurry can flow. The geometry of the helical watercourse is such that an initially homogenous distribution of sand and rubber across the width of the watercourse changes with distance along the watercourse to have the sand concentrated on one side and the rubber concentrated on the other side. The spiral separator may comprise a first outlet via which material from one side of the watercourse exits the classifier. For example, the first outlet may receive a sand slurry from the inner side of the watercourse. The spiral separator may comprise a second outlet via which material from the other side of the watercourse exits the classifier. For example, the second outlet may receive a rubber slurry from the outer side of the watercourse. The spiral separator may comprise a third outlet via which material from a central region of the watercourse exits the classifier. Such material is typically a mix of sand and rubber and may be recirculated to the top of the spiral separator to be separated again. The spiral separator may comprise a splitter configured to direct flow across the watercourse to the various different outlets. A spiral separator may be a particularly compact and/or effective way of separating the sand and rubber from the sand/rubber slurry. A spiral separator may be particularly useful in the case that the density of the rubber is too high for the rubber to float on the fluidised bed of an upflow classifier, thus using a spiral separator may increase the range of infill materials with which the present method may be used.

The apparatus may comprise a trash screen configured to separate debris from the infill material. The apparatus may be arranged such that infill material passes through the trash screen and into the compartment. The apparatus may comprise a trash receptacle (for example a bag or container) configured to receive trash from the trash screen. Trash may be discharged from the side of the trash screen to the trash receptacle. The trash screen may be inclined to facilitate the movement of trash along the trash screen to the trash receptacle. The apparatus may comprise a motor, for example two motors, configured to vibrate the trash screen. Vibration of the screen may encourage the trash to move along the screen. The apparatus may comprise a water line configured to provide water to the compartment in which the infill material is received, for example by providing a flow of water that goes through the trash screen and into the compartment with the infill material. Thus, water and infill material may pass through the trash screen and combine in the compartment to produce the infill slurry.

The apparatus may comprise a slurry hopper. The slurry hopper may comprise the compartment in which the water and infill material mix. The slurry hopper may be located beneath the trash screen.

The apparatus may be arranged so that, in use, sand and rubber is fed from the hydrocyclone to the density separator.

The apparatus may comprise one or more pumps to circulate the various slurries and water between the different elements of the apparatus.

The apparatus may comprise a power generator for generating the electricity necessary for the apparatus to function. Provision of such a power generator may facilitate the use of the apparatus on site.

The apparatus may comprise a main water inlet for connection to a water supply.

The apparatus of the invention as described above may be provided in a single unit. For example, wherein the elements of the apparatus described above are mounted on a common platform and/or framework. Providing the apparatus in a single unit may facilitate transport of the equipment to the site. The footprint of the unit may be contained within the footprint of a standard 20ft shipping container. The unit may have a length of 20ft (or less) and a width of 8 ft (or less). The unit may have a height of 9ft 6inches, for example 8ft 6inches (or less).

The apparatus is configured for movement between a transport configuration and an operation configuration. In the case that the apparatus comprises a spiral separator, the longitudinal axis of the spiral is substantially horizontal in the transport configuration and substantially vertical in the operation configuration. In the case that the apparatus comprises a hydrocyclone, the longitudinal axis of the hydrocyclone is substantially horizontal in the transport configuration and substantially vertical in the operation configuration. The hydrocyclone may be mounted on the spiral separator so that in the operation configuration the hydrocyclone is atop the spiral separator. The spiral separator and/or hydrocyclone may be mounted for movement, for example pivotal movement, between the transport and operation configurations. Alternatively, the spiral separator and/or hydrocyclone may be demounted and remounted to reconfigure the apparatus between the transport and operation configurations.

The apparatus may comprise a water recycling unit configured to supply water for use in the separation process. The water recycling unit may be provided as a separate unit to the (main) unit described above. In use, the water recycling unit may be connected to the main unit, for example via the main water inlet. The footprint of the water recycling unit may be contained within the footprint of a standard 20ft shipping container. The unit may have a length of 20ft (or less) and a width of 8 ft (or less). The unit may have a height of 9ft 6inches, for example 8ft 6inches (or less).

The apparatus may comprise a sand drying unit configured to dry the sand separated by the separation unit. The sand drying unit may be provided as a separate unit to the (main) unit described above. The footprint of the sand drying unit may be contained within the footprint of a standard 20ft shipping container. The unit may have a length of 20ft (or less) and a width of 8 ft (or less). The unit may have a height of 9ft 6inches, for example 8ft 6inches (or less).

The apparatus may be configured such that water removed from the infill slurry, fibre slurry, sand/rubber slurry, sand slurry and/or rubber slurry is returned to the water recycling unit. The water recycling unit may be configured to store and/or treat the water so that it can be reused in the separation process. The water recycling unit may comprise a clarifier. The water recycling unit may comprise a storage compartment for storing water.

Infill material may comprise sand, rubber and fibres and, optionally, debris. The infill material may predominantly comprise sand and rubber, and may further comprise small amounts of fibre (synthetic fibre) and even smaller amounts of debris. It is likely that during use of the synthetic turf, debris will have been brought onto the surface which may then also form part of the infill material, which leads to sand, rubber and fibres making up less than 100% of the infill material in practice, with the remaining volume/weight of infill material being made up of debris. Sand and rubber may make up the majority of the infill material by volume and/or by weight. Sand and rubber may make up over 80%, for example over 90%, for example over 95%, for example over 98% of the infill material by volume and/or by weight. The rubber of the infill material may be granular rubber. The rubber may be crumbed rubber, for example crumbed rubber made from used tyres. The rubber may be EPDM rubber (ethylene propylene diene monomer rubber, also referred to as green rubber), and/or SBR rubber (styrene-butadiene rubber, also referred to as black rubber). The rubber may be TPE (thermoplastic elastomer), Cork, EPDM variations, PE (polyethylene) or TVP (thermoplastic vulcanised rubber). The sand of the infill material is granular. The fibre of the infill material is commonly a plastic-based fibre. The fibre may be a plastic fibre. The fibre may be a synthetic fibre. The term "synthetic fibre" may be used herein to describe the fibre. The fibre may be a strand, sinew or thread, for example having a blade-of-grass-like appearance. The fibre may be made from one or more plastics, for example two or three plastics. The fibres may be damaged and may therefore be small parts of fibres.

Further information on the properties of some example infill materials may be found in Table 1, below.

**Table 1 - Properties of example infill materials**

| | **Particle Size** | **Density** | **Bulk Density** |
|---|---|---|---|
| **Sand** | 0.2-0.8mm | 2.65 g /cm3 | 1600 g / l |
| **EPDM** | 0.5-2.0mm | 1.6 g / cm3 | 650 g / l |
| **SBR** | 0.5-2.0mm | 1.2 g / cm3 | 400 g / l |

| **Other:** | | | |
|---|---|---|---|
| **Coated SBR** | 0.5-2.0mm | 1.3 g / cm3 | 500 g / l |
| **EPDM Fibre** | | 1.6 g / cm3 | 500 g / l |
| **Cork** | 0.5-2.0mm | 0.2 g /cm3 | |
| **RC-EPDM** | 0.8-2.8mm | | 600 g / l |
| **Hybrid EPDM** | 0.5-2.7mm | 1.4 g / cm3 | 450 g / l |
| **TPE** | 0.5-1.5mm | 0.6 g / cm3 | 500 g / l |

The trash screen may have a trash screen size. The trash screen may allow granules smaller than the trash screen size to pass through, but entrain larger particles. The trash screen size may be between 3mm and 8mm, for example between 4mm and 7mm, for example 5mm.

A slurry, as used herein, should be understood to mean a mixture of solids and water. For example, a rubber slurry is a mixture of rubber and water, a fibre slurry is a mixture of synthetic fibre and water, a sand slurry is a mixture of sand and water, infill slurry is a mixture of infill material and water, and sand/rubber slurry is a mixture of sand and rubber and water.

Following separation, the sand and rubber may be almost pure, or have some small contaminants present. For example, the sand which is separated and collected may have a purity above 95%, or may have a purity above 98%. The rubber which is separated and collected may have a purity above 95%, or may have a purity above 98%. Where purity is mentioned as a percentage, it may be either by weight or volume.

The apparatus may comprise a sand screen configured to separate sand from the sand slurry (i.e. to separate sand from water). The sand screen may be a dewatering screen. The apparatus may comprise a water-collection compartment in which water is collected after passage through the sand screen. In use, the water-collection compartment may be connected to the water treatment unit. The apparatus may comprise a sand receptacle (for example a bag or container) for collecting sand following separation. The sand receptacle may be configured to receive sand from the sand screen. The apparatus may comprise a motor, for example two motors, configured to vibrate the screen. The sand screen may be inclined, for example towards the sand receptacle.

The apparatus may comprise a rubber screen configured to separate rubber from the rubber slurry (i.e. to separate rubber from water). The rubber screen may be a dewatering screen. The apparatus may comprise a water-collection compartment in which water is collected after passage through the rubber screen. In use, the water-collection compartment may be connected to the water recycling unit. The apparatus may comprise a rubber receptacle (for example a bag or container) for collecting rubber following separation. The rubber receptacle may be configured to receive rubber from the rubber screen. The apparatus may comprise a motor, for example two motors, configured to vibrate the screen. The rubber screen may be inclined, for example towards the rubber receptacle.

The apparatus may comprise a fibre screen configured to separate fibre from the fibre slurry (i.e. to separate fibre from water). The fibre screen may be a dewatering screen. The apparatus may comprise a water-collection compartment in which water is collected after passage through the fibre screen. In use, the water-collection compartment may be connected to the water recycling unit. The apparatus may comprise a fibre receptacle for collecting fibres following separation. The fibre receptacle may be configured to receive fibre from the fibre screen. The apparatus may comprise a motor, for example two motors, configured to vibrate the screen. The fibre screen may be inclined, for example towards the fibre receptacle.

Each screen may be connected to the same or separate water-collection compartment. The apparatus may comprise one or more water-collection hoppers each comprising a water-collection compartment.

The apparatus may configured to process between 0.5 m³/hour and 40 m³/hour of infill material, for example between 0.5 m³/hour and 30 m³/hour of infill material, for example between 0.5 m³/hour and 20 m³/hour of infill material, for example between 0.5 m³/hour and 10 m³/hour of infill material, for example between 0.5 m³/hour and 2 m³/hour of infill material, for example between 0.8 and 1.5 m³/hour of infill material.

It may be that the majority, for example more than 90%, for example around 95% of the infill material by volume and/or weight is sand and rubber.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1 shows a process flow diagram of an example method according to the invention.
Figure 2 shows a schematic side view of the separation unit according to a first example embodiment of the invention, when in a stowed configuration;
Figure 3 shows a side view of the separation unit of Figure 2, when in an operational configuration;
Figure 4 shows a plan view of the separation unit of Figure 2, when in the stowed configuration;
Figure 5 shows an end view of the separation unit of Figure 2, when in the stowed configuration;
Figure 6 shows a side view of the separation unit of Figure 2, when in the operational configuration;

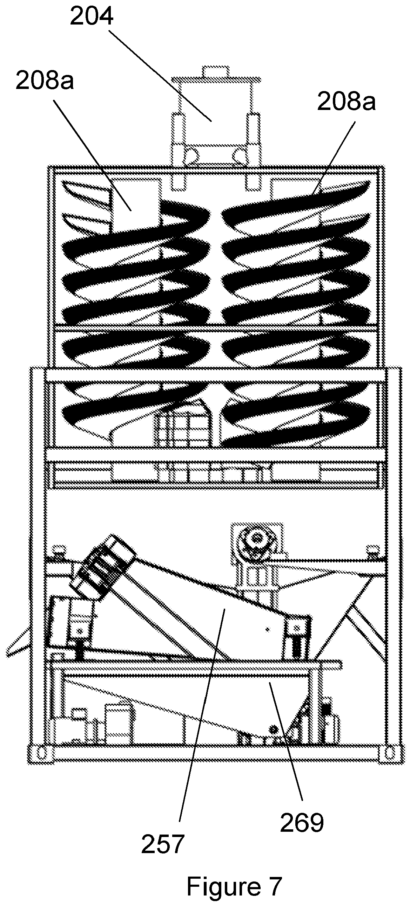

Figure 7 shows a side end view of the separation unit of Figure 2, when in the operational configuration;

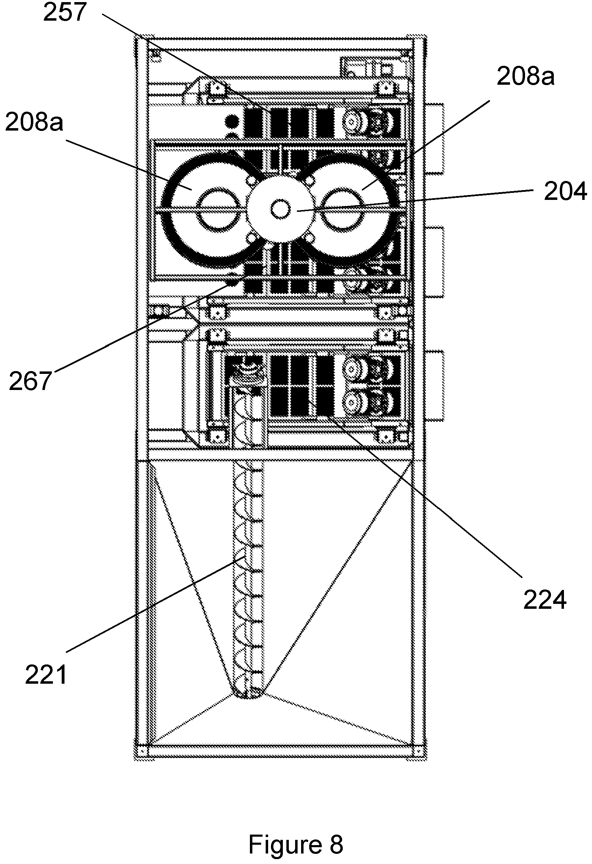

Figure 8 shows a plan view of the separation unit of Figure 2, when in the operational configuration;

### Detailed Description

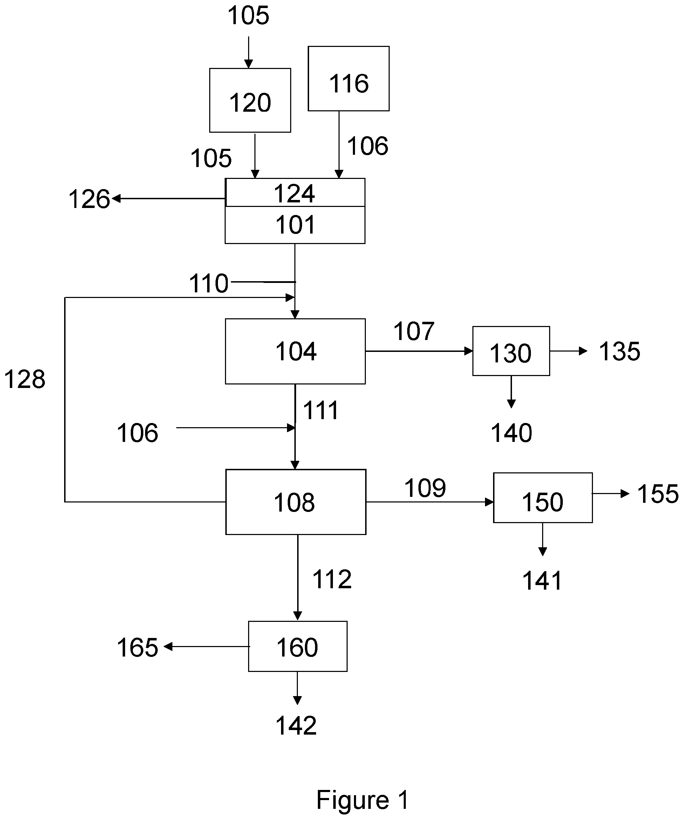

Figure 1 shows an example system for separating synthetic turf infill material in accordance with an embodiment of the present invention. Infill material 105 is fed from a hopper 120 into a tank 101, in which the infill material 105 mixes with water 106. Infill material 105 may be released into the tank at a constant rate, from the hopper 120.

Optionally, infill material 105 is fed from the hopper 120 via trash screen 124, which separates trash 126 from the infill material 105. The trash screen prevents trash (e.g. debris, which is not sand, rubber or synthetic grass) from passing into the tank 101. Trash is discharged from the screen 124 to a bag or container (not shown) or the like, located adjacent the trash screen. In some embodiments the trash screen prevents particles larger than 5mm from passing through the screen. Trash 126 is discharged from the top side of the trash screen 124. In other embodiments, different methods of removing debris from the infill material prior to mixing may be employed.

Optionally, the method takes place at the site of a synthetic turf surface and includes steps of transporting the apparatus to the site and removing the infill material from the synthetic turf surface (not shown).

Optionally, water 106 is fed into the trash screen 124 from a water recycling unit 116 at the same time as infill material 105 is fed to the trash screen 124, which helps to pass the infill material 105 through the trash screen 124 and separate the infill material 105 from the trash 126. The water 106 and the infill material 105 mix in the tank 101 to form infill slurry 110. In some embodiments the tank 101 is a sump of the trash screen, in other embodiments it may be a separate compartment or part of a hopper. The infill slurry 110 is then pumped from the tank 101 to a hydrocyclone 104. Hydrocyclones are usually used for separating water from heavier particles. In this usage, the synthetic fibres which make up a part of the infill slurry 110 also leave the hydrocyclone in the overflow, with the water. Thus, the hydrocyclone 104 is used to separate synthetic fibres and water (fibre slurry 107) from the infill slurry 110. The synthetic fibre slurry 107 is fed to a fibre screen 130, which separates the synthetic fibres 135 from the water 140. The heavy component which leaves the hydrocyclone in the underflow is a sand and rubber slurry (sand/rubber slurry 111), comprising sand, rubber and water. Water 106 can be injected or otherwise combined with the sand/rubber slurry 111 to ensure the optimum feed consistency of the sand/rubber slurry 111 which is fed to a spiral separator 108. The spiral separator 108 splits sand/rubber slurry 111 into sand slurry 109, rubber slurry 112 and a left-over sand/rubber slurry 128. The sand slurry 109 is fed to a sand screen 150, which separates the sand 155 from the water 141. The rubber slurry 112 is fed to a rubber screen 160 which separates the rubber 165 from the water 142. In the embodiment of Figure 1 the sand/rubber slurry 128 is recirculated to mix with infill slurry 110 upstream of the hydrocyclone 104. In the same or yet further embodiments, the sand/rubber slurry may, additionally or alternatively be returned into the infill slurry 110 in the tank 101 and/or into the sand/rubber slurry 111. The water 141, 142, 140, which passes through the sand screen 150, rubber screen 160 and synthetic fibre screen 130 is collected below the screens in a hopper or container or sump or the like, and pumped to the separate water recycling unit 116 which comprises a clarifier (not shown) and water storage compartment (not shown), for example a bund or a tank, or water may be fed back into the process at the trash screen and/or into the sand/rubber slurry. The water 141, 142, 140 is treated in the clarifier, and is then stored in the water storage compartment. Water 106 pumped from the water storage compartment of the water recycling unit 116 can be used wherever water is introduced into the process.

The sand 155, rubber 165, synthetic fibres 135 and trash 126 which are separated in the method may be collected separately by any suitable means, for example in piles, tanks, hoppers, containers, bags or construction sacks. Synthetic fibre 135 and trash 126 may be handled together for disposal. Sand 155 and rubber 165 may be reused in any new synthetic fibre surface laid at the site.

Optionally, a sand drying unit (not shown) configured to dry the sand 155 separated by the separation unit is also provided.

Mixing the infill material 105 with water 106, facilitates the use of wet separation processes (separation processes which include water). For an equivalent volume of infill material, wet separation processes can be carried out using more compact and lighter equipment than dry separation processes (where water is not used) such as the one disclosed in WO 2015/059094. Accordingly the system in accordance with the present invention may reduce the overall size of the equipment needed to separate the infill material 105 from one another. Further, the reduction in size may facilitate the separation of infill material on site.

Additionally or alternatively, use of wet separation processes may lead to improved separation for example sand may appear clear following wet separation in contrast to prior art dry separation processes.

Additionally or alternatively, by having a water recycling capability, the amount of water required for the separation may be reduced, as, after start-up, the only fresh water that needs to be added to the process is water which replaces that lost through being present with the sand 155, rubber 165, synthetic fibre 135 and debris 126 which exits the system.

While the system described above uses a spiral separator as a density separator, other types of density separators may be used, for example fluidized bed separators, upflow classifiers and/or separations jigs.

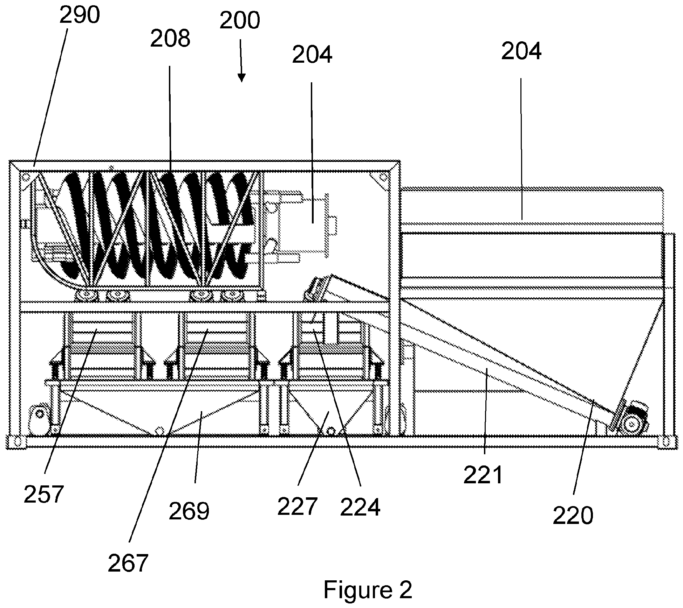

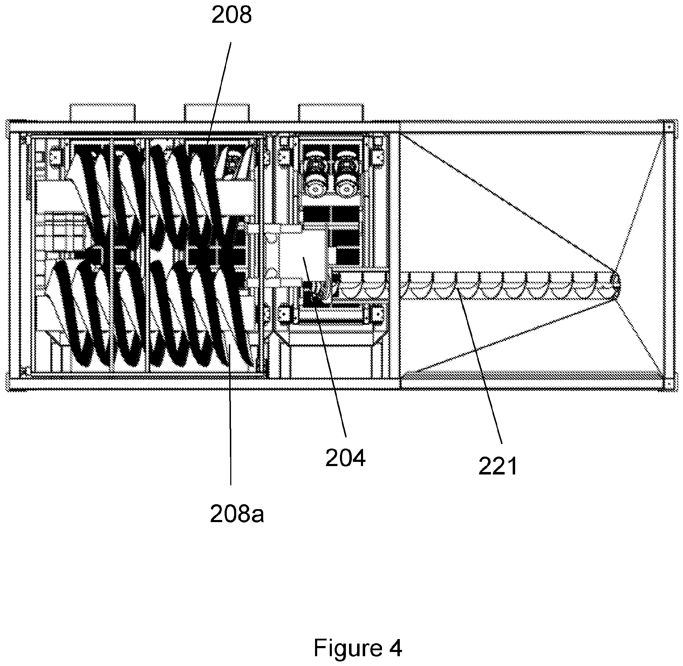

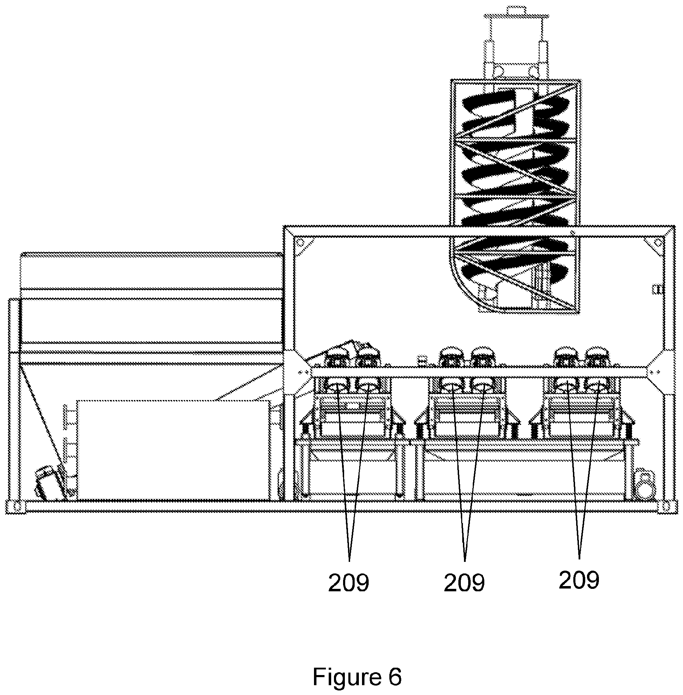

In the description of figures 2 to 6, reference numerals correspond to those of similar elements in figure 1 but incremented by one hundred, for example spiral separator 108 of figure 1 corresponds to spiral separator 208.

Figures 2 to 6 show an example separation unit 200 in accordance with an embodiment of the invention. Arranged along one of the long sides of the unit are (in order): A water-collection hopper 269, and a slurry hopper 227. A feed hopper 220 is located at one end of the unit 200, adjacent the slurry hopper 227. The feed hopper 220 is located at the opposite end of the unit to the water-collection hopper 269. A sand screen 257 is located above and toward one end of the water-collection hopper 269. A rubber screen 267 is located above and to the other end of the water-collection hopper 269 and a trash screen 224 is located above the slurry hopper 227. It will be appreciated that in other embodiments the hoppers and screens may be laid out in other, different, configurations or that the hoppers may be replaced with other appropriate containers. Each of the screens 257, 267 and 224 is inclined and vibrated by two motors 209 mounted atop the screen. A bag or sack (not shown) is located adjacent the screen to collect particles retained by the screen

A dosing unit (not shown) is located within a water recycling unit (not shown) to chemically dose the water to prevent bacterial growth and/or reduce levels of pathogens in the water.

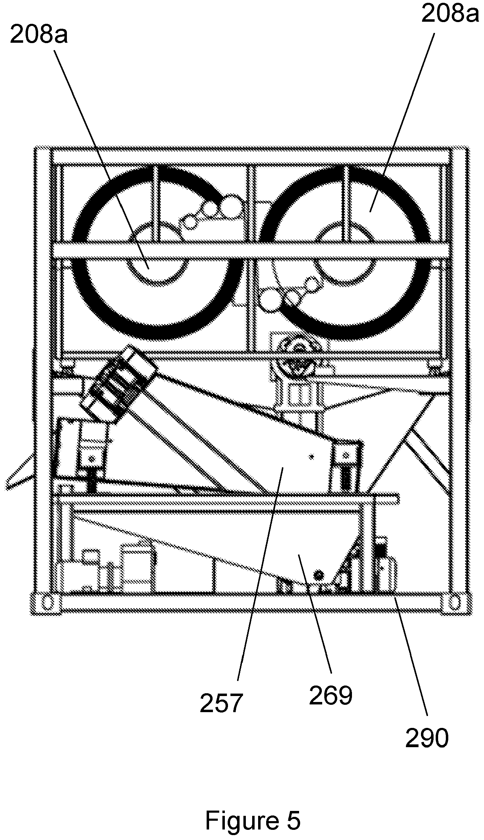

In figure 2, a spiral separator 208 is arranged in a stowed position (suitable for transport or storage) with the longitudinal axis of the spiral separator 208 extending horizontally along the length of the unit above the water-collection hopper 269 and slurry hopper 227. The spiral separator 208 comprises two helical troughs 208a (see Figure 5) extending along the longitudinal axis of the spiral separator 208. A hydrocyclone and flow distribution chamber, hereafter referred to as hydrocyclone 204, is connected to the distal end of the spiral separator 208 (the end located above the slurry hopper 227 in Fig. 2).

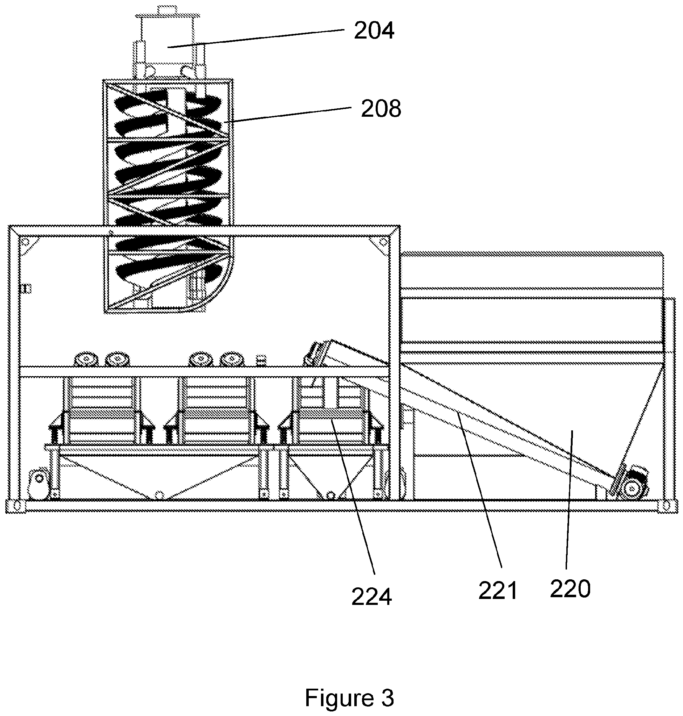

In figure 3, the spiral separator 208 is arranged in an operational position, with the longitudinal axis of the spiral separator 208 extending vertically upwards. In the operative position the spiral separator 208 is located above the water-collection hopper 269.

The feed-hopper 220 has a conveyor belt/auger 221 which extends between a position adjacent the short edge of the unit and the bottom of the feed hopper 220 to a position above the trash screen 224 and slurry hopper 227. A feed line (not shown) extends from the slurry hopper 227 to the hydrocyclone 204. When shown in the operative position of Figure 3 the bottom of the hydrocyclone 204 is connected to the top of the spiral separator 208. A first water line (not shown) provides water to the trash screen 224, for example from a separate water recycling unit (not shown). A second water line (not shown) provides water from the water recycling unit to a point between the hydrocyclone 204 and the spiral separator 208. A return line (not shown) connects the hydrocyclone overflow to a water recycling unit, optionally via a fibre screen (not shown). The water recycling unit is contained in a separate unit, and is connected to the separation unit 200 to provide water thereto. Output lines (not shown) connect the bottom of the spiral separator 208 to each of the sand screen 257 and the rubber screen 267.

The present embodiment comprises two separators: a hydrocyclone 204 and a spiral separator 208. In other embodiments, a different density separator may be used in place of the spiral separator 208, for example a fluidised bed separator, upflow classifier or a hydraulic pulsating separation jig. In the same or yet further embodiments, the hydrocyclone 204 may be absent.

The arrangement shown in figures 2 to 6 also includes various pumps and piping (not shown for the sake of clarity) which pump/transport the slurries/water in the system.

The separation unit 200 can fit into the footprint of a standard 20ft shipping container. In the transport configuration (shown in Fig. 2) the separation unit can fit within the dimensions of a standard 20ft shipping container (including the height). In the operation configuration (shown in Fig. 3) the spiral separator 208 and hydrocyclone 204 extend above the height of a standard shipping container.

In use, infill material is removed from the synthetic turf surface and deposited in the feed hopper 220 of the separation unit 200 located at the site of the synthetic turf surface. Debris is removed from the infill material as it passes through the trash screen 224 and the infill material mixes with water to produce infill slurry which is collected in slurry hopper 227 . Trash captured by the trash screen 224 is collected separately. The infill slurry from hopper 227 is pumped to the top of the hydrocyclone 204 where it is separated into a fibre slurry and sand/rubber slurry. The sand/rubber slurry passes from the bottom of the hydrocyclone 204 to the top of the spiral separator 208. The fibre slurry passes from the top of the hydrocyclone 204 to the water recycling unit, via a fibre screen (not shown). Optionally, water is mixed with the sand/rubber slurry between the bottom of the hydrocyclone 204 and the top of the spiral separator 208. The sand/rubber slurry passes through the spiral separator which separates the sand/rubber slurry into (i) sand slurry, (ii) rubber slurry and (iii) sand/rubber slurry. The sand slurry flows from the spiral separator 208 to the sand screen 257 where sand is separated from the sand slurry and deposited in a pile or receptacle. Water passes through the sand screen 257 to water-collection hopper 269. The rubber slurry flows from the spiral separator 208 to the rubber screen 267 where rubber is separated from the rubber slurry and deposited in a pile or receptacle. Water passes through the rubber screen 267 to water-collection hopper 269. Thus, the water-collection hopper 269 collects water which has been screened for sand and rubber respectively. Water is pumped from the water-collection hopper 269 to the water recycling unit and/or the water is recirculated back onto the trash screen/into the rubber/sand slurry. Thus, apparatus in accordance with the present example embodiment may effectively separate sand, rubber and fibre from infill material. Additionally or alternatively, apparatus in accordance with the present invention may allow separation to take place on site, thereby reducing transportation costs and/or allowing for reuse of the infill materials in any new synthetic turf surface at that site. Additionally or alternatively, recirculation and recycling of water within the apparatus may reduce the amount of water used during the separation process.

While a hydrocyclone and spiral separator have been described above it will be appreciated that different forms of density separator may be used, including fluidized bed separators, upflow clarifiers and separation jigs.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of separating infill material (105) of synthetic turf, the infill material comprising sand, rubber and fibres, the method comprising
combining the infill material with water (106) to form an infill slurry (110), and
separating one or more of the sand, rubber and fibres from the infill slurry; and
**characterised in that**
a hydrocyclone (104) is used to separate the infill slurry into a fibre slurry (107) and a sand/rubber slurry (111); and
a density separator (108) is used to separate sand and rubber from the sand/rubber slurry, wherein the density separator is a spiral separator.

2. A method according to claim 1, further comprising the step of adding water to the sand/rubber slurry (111) after it has left the hydrocyclone (104) and before it has entered the density separator (108).

3. A method according to claim 1 or claim 2, wherein the majority of the water which enters the hydrocyclone (104) leaves the hydrocyclone in the fibre slurry (107).

4. A method according to any previous claim, wherein the water component of the fibre slurry (107) is recycled for use elsewhere in the method.

5. A method according to any previous claim, further comprising the step of feeding the infill material (105) into a trash screen (124) to separate debris from the infill material before combining the infill material with water, wherein the trash screen optionally has a grating-size of between 3mm and 8mm.

6. A method according to any previous claim, wherein the infill material (105) is loaded into a hopper (120) and the infill material is fed from the hopper to the trash screen (124).

7. A method according to any previous claim, wherein the infill material (105) is removed from a synthetic turf pitch prior to being combined with the water (106), and optionally wherein the infill material is removed from the synthetic turf pitch by vacuuming, raking, brushing and/or sweeping.

8. A method according to any previous claim, wherein the method takes place on site.

9. An apparatus for separating sand and rubber from synthetic turf infill material (105) comprising sand, rubber and fibres, the apparatus comprising a compartment (101) for receiving infill material and combining the infill material with water (106) to produce an infill slurry (110), a first separator (104) configured to separate the infill slurry into a fibre slurry (107) and a sand/rubber slurry (111), and a second separator (108) configured to separate the sand/rubber slurry to produce a sand slurry (109) and a rubber slurry (112); and
wherein the first separator is a hydrocyclone, and the second separator is a density separator, and the density separator is a spiral separator, and **characterised in that**
the apparatus is configured for movement between a transport configuration and an operation configuration, and
the longitudinal axis of the spiral of the spiral separator is substantially horizontal in the transport configuration and substantially vertical in the operation configuration; and
the longitudinal axis of the hydrocyclone is substantially horizontal in the transport configuration and substantially vertical in the operation configuration.

10. An apparatus according to claim 9, wherein the apparatus comprises a trash screen (124) for removing debris from the infill material (105), and optionally wherein infill material passes through the trash screen and into the compartment (101).

11. An apparatus according to claim 9 or claim 10, wherein the apparatus is provided in a single unit.

12. An apparatus according to claim 11, wherein the unit further comprises a hopper (120), a sand screen (150), a rubber screen (160), a pump, and/or piping.

13. An apparatus according to any of claims 9 to 12, wherein the apparatus is contained within the footprint of a standard 20ft shipping container.

14. A method according to any of claims 1 to 8, the method comprising using the apparatus of claims 9 to 13.

15. A method according to claim 14, further comprising transporting the apparatus of claims 9 to 13 to the site of a synthetic turf surface.

## Patentansprüche

1. Verfahren zum Trennen von Füllmaterial (105) eines Kunstrasens, das Sand, Kautschuk und Fasern aufweist, mit
Kombinieren des Füllmaterials mit Wasser (106) zum Ausbilden eines Füllschlamms (110), und
Trennen eines oder mehrerer des Sands, Kautschuks und der Fasern aus dem Füllschlamm; und
**dadurch gekennzeichnet, dass**
ein Hydrozyklon (104) zum Trennen des Füllschlamms in einen Faserschlamm (107) und einen Sand-/Kautschukschlamm (111) verwendet wird, und
ein Dichteseparator (108) zum Trennen von Sand und Kautschuk aus dem Sand-/Kautschukschlamm verwendet wird, wobei der Dichteseparator ein Wendelscheider ist.

2. Verfahren nach Anspruch 1, ferner mit dem Schritt zum Zugeben von Wasser zu dem Sand-/Kautschukschlamm (111), nachdem er den Hydrozyklon (104) verlassen hat und bevor er in den Dichteseparator (108) eingetreten ist.

3. Verfahren nach Anspruch 1 oder Anspruch 2, bei dem der Großteil des Wassers, das in den Hydrozyklon (104) eintritt, den Hydrozyklon in dem Faserschlamm (107) verlässt.

4. Verfahren nach einem vorhergehenden Anspruch, bei dem die Wasserkomponente des Faserschlamms (107) zur Verwendung an anderer Stelle in dem Verfahren recycelt wird.

5. Verfahren nach einem vorhergehenden Anspruch, ferner mit dem Schritt zum Zuführen des Füllmaterials (105) in ein Abfallsieb (124) zum Trennen von Trümmern aus dem Füllmaterial, bevor das Füllmaterial mit Wasser kombiniert wird, bei dem das Abfallsieb optional eine Gittergröße von zwischen 3 mm und 8 mm aufweist.

6. Verfahren nach einem vorhergehenden Anspruch, bei dem das Füllmaterial (105) in einen Trichter (120) geladen wird und das Füllmaterial aus dem Trichter dem Abfallsieb (124) zugeführt wird.

7. Verfahren nach einem vorhergehenden Anspruch, bei dem das Füllmaterial (105) aus einem Kunstrasenfeld entfernt wird, bevor es mit dem Wasser (106) kombiniert wird, und optional bei dem das Füllmaterial aus dem Kunstrasenfeld durch Absaugen, Harken, Bürsten und/oder Kehren entfernt wird.

8. Verfahren nach einem vorhergehenden Anspruch, bei dem das Verfahren an Ort und Stelle stattfindet.

9. Vorrichtung zum Trennen von Sand und Kautschuk aus Kunstrasenfüllmaterial (105), das Sand, Kautschuk und Fasern aufweist, welche Vorrichtung ein Fach (101) zum Aufnehmen von Füllmaterial und Kombinieren des Füllmaterials mit Wasser (106) zum Produzieren eines Füllschlamms (110), einen ersten Separator (104), der dazu ausgebildet ist, den Füllschlamm in einen Faserschlamm (107) und einen Sand-/Kautschukschlamm (111) zu trennen, und einen zweiten Separator (108), der dazu ausgebildet ist, den Sand-/Kautschukschlamm zum Produzieren eines Sandschlamms (109) und eines Kautschukschlamms (112) zu trennen, aufweist, und bei der der erste Separator ein Hydrozyklon ist, und der zweite Separator ein Dichteseparator ist, und der Dichteseparator ein Wendelscheider ist, und **dadurch gekennzeichnet, dass**
die Vorrichtung für eine Bewegung zwischen einer Transportkonfiguration und einer Betriebskonfiguration ausgebildet ist, und
die Längsachse der Wendel des Wendelscheiders in der Transportkonfiguration im Wesentlichen horizontal und in der Betriebskonfiguration im Wesentlichen vertikal ist; und
die Längsachse des Hydrozyklons in der Transportkonfiguration im Wesentlichen horizontal und in der Betriebskonfiguration im Wesentlichen vertikal ist.

10. Vorrichtung nach Anspruch 9, bei der die Vorrichtung einen Abfallsieb (124) zum Entfernen von Trümmern aus dem Füllmaterial (105) aufweist, und optional bei dem das Füllmaterial durch das Abfallsieb und in das Fach (101) verläuft.

11. Vorrichtung nach Anspruch 9 oder Anspruch 10, bei der die Vorrichtung in einer einzigen Einheit vorgesehen ist.

12. Vorrichtung nach Anspruch 11, bei der die Einheit ferner einen Trichter (120), ein Sandsieb (150), ein Kautschuksieb (160), eine Pumpe und/oder eine Verrohrung aufweist.

13. Vorrichtung nach einem der Ansprüche 9 bis 12, bei der die Vorrichtung innerhalb der Grundfläche eines Standard-20-Fuß-Schiffscontainers enthalten ist.

14. Verfahren nach einem der Ansprüche 1 bis 8, mit einem Verwenden der Vorrichtung nach Ansprüchen 9 bis 13.

15. Verfahren nach Anspruch 14, ferner mit einem Transportieren der Vorrichtung nach Ansprüchen 9 bis 13 zu der Stelle einer Kunstrasenfläche.

## Revendications

1. Procédé de séparation d'un matériau de remplissage (105) de gazon synthétique, le matériau de remplissage comprenant du sable, du caoutchouc et des fibres, le procédé comprenant les étapes consistant à
combiner le matériau de remplissage avec de l'eau (106) pour former une boue de remplissage (110), et
séparer un ou plusieurs du sable, du caoutchouc et des fibres à partir de la boue de remplissage ; et **caractérisé en ce que**
un hydrocyclone (104) est utilisé pour séparer la boue de remplissage en une boue de fibres (107) et une boue de sable/caoutchouc (111) ; et
un séparateur de densité (108) est utilisé pour séparer le sable et le caoutchouc de la boue de sable/caoutchouc, dans lequel le séparateur de densité est un séparateur en spirale.

2. Procédé selon la revendication 1, comprenant en outre l'étape consistant à ajouter de l'eau à la boue de sable/caoutchouc (111) après qu'elle ait quitté l'hydrocyclone (104) et avant qu'elle ne soit entrée dans le séparateur de densité (108).

3. Procédé selon la revendication 1 ou la revendication 2, dans lequel la majorité de l'eau qui pénètre dans l'hydrocyclone (104) quitte l'hydrocyclone dans la boue de fibres (107).

4. Procédé selon l'une quelconque des revendications précédentes, dans lequel le composant eau de la boue de fibres (107) est recyclé pour une utilisation ailleurs dans le procédé.

5. Procédé selon l'une quelconque des revendications précédentes, comprenant en outre l'étape consistant à introduire le matériau de remplissage (105) dans un tamis (124) pour séparer des débris provenant du matériau de remplissage avant de combiner le matériau de remplissage avec de l'eau, dans lequel le tamis a éventuellement une taille de grille comprise entre 3 mm et 8 mm.

6. Procédé selon l'une quelconque des revendications précédentes, dans lequel le matériau de remplissage (105) est chargé dans une trémie (120) et le matériau de remplissage est alimenté de la trémie au tamis (124).

7. Procédé selon l'une quelconque des revendications précédentes, dans lequel le matériau de remplissage (105) est retiré d'un terrain de gazon synthétique avant d'être combiné avec l'eau (106), et éventuellement dans lequel le matériau de remplissage est retiré du terrain de gazon synthétique par aspiration, ratissage, brossage et/ou balayage.

8. Procédé selon l'une quelconque des revendications précédentes, dans lequel le procédé a lieu sur site.

9. Appareil pour séparer le sable et le caoutchouc d'un matériau de remplissage de gazon synthétique (105) comprenant du sable, du caoutchouc et des fibres, l'appareil comprenant un compartiment (101) pour recevoir le matériau de remplissage et combiner le matériau de remplissage avec de l'eau (106) pour produire une boue de remplissage (110), un premier séparateur (104) configuré pour séparer la boue de remplissage en une boue de fibres (107) et une boue de sable/caoutchouc (111), et un second séparateur (108) configuré pour séparer la boue de sable/caoutchouc afin de produire une boue de sable (109) et une boue de caoutchouc (112) ; et
dans lequel le premier séparateur est un hydrocyclone, et le second séparateur est un séparateur de densité, et le séparateur de densité est un séparateur en spirale, et **caractérisé en ce que**
l'appareil est configuré pour passer d'une configuration de transport et une configuration de fonctionnement, et
l'axe longitudinal de la spirale du séparateur en spirale est sensiblement horizontal dans la configuration de transport et sensiblement vertical dans la configuration de fonctionnement ; et
l'axe longitudinal de l'hydrocyclone est sensiblement horizontal dans la configuration de transport et sensiblement vertical dans la configuration de fonctionnement.

10. Appareil selon la revendication 9, dans lequel l'appareil comprend un tamis (124) pour éliminer des débris à partir du matériau de remplissage (105), et éventuellement dans lequel le matériau de remplissage passe à travers le tamis et jusque dans le compartiment (101).

11. Appareil selon la revendication 9 ou la revendication 10, dans lequel l'appareil est fourni en une seule unité.

12. Appareil selon la revendication 11, dans lequel l'unité comprend en outre une trémie (120), un tamis à sable (150), un tamis à caoutchouc (160), une pompe et/ou une tuyauterie.

13. Appareil selon l'une quelconque des revendications 9 à 12, dans lequel l'appareil est contenu dans l'empreinte d'un conteneur d'expédition standard de 20 pieds.

14. Procédé selon l'une quelconque des revendications 1 à 8, le procédé comprenant l'utilisation de l'appareil selon les revendications 9 à 13.

15. Procédé selon la revendication 14, comprenant en outre le transport de l'appareil des revendications 9 à 13 vers le site d'une surface de gazon synthétique.
